# EUROPEAN PATENT APPLICATION

(11) **EP 2 741 245 A1**
(43) Date of publication of application: **11.06.2014**
(21) Application number: 12862720.5
(22) Date of filing: 31.12.2012
(51) Int. Cl.: G06Q 20/16

(54) **MOBILE PAYMENT METHOD, DEVICE AND SYSTEM FOR SERVER END AND CLIENT**

(30) Priority: 31.12.2011 CN 201110460636
(71) Applicant: Peking University Founder Group Co., Ltd, Haidian District Beijing 100871 (CN); Beijing Founder Electronics Co., Ltd., Haidian District, Beijing 100085 (CN)
(72) Inventor: LIU, Fang, - (CN); GAO, Yujun, - (CN)
(74) Representative: Cohausz & Florack
(86) International application number: PCT/CN2012/088043
(87) International publication number: WO 2013/097809

(57) **Abstract**

The present invention provides a mobile payment method, device and system for a server and a client. The mobile payment method for a server includes: receiving a payment request message sent by a client; and selecting one piece of payment channel information in a preset payment channel information set and issuing the same to the client. The payment channel information set includes a plurality of pieces of channel information, regions covered by different payment channel information do not overlap completely, and the multiple pieces of payment channel information cover all regions. The server may select different payment channel information provided by a plurality of payment providers to form a payment channel information set so that the payment server that may be provided can cover all regions, which overcomes the limitation in the prior art that a certain piece of payment channel information only covers some regions.

## Description

### TECHNICAL FIELD

The present invention relates to the field of communication technology, and more particularly to a mobile payment method, a device and a system for a server and a client.

### BACKGROUND ART

With popularization and fast development of mobile devices, mobile payment using mobility and uniqueness of a mobile device is applied increasingly, wherein the most popular method is short message payment.

However, the existing short message payment providers only provide payment channel information covering some regions or launch payment in some regions for merchants. Thereby the usage of short message software is restricted, and the scope of application is affected. Moreover, during the usage of text message software, in order to confirm the payment provider providing service, a user is often requested to input the region information of the user's mobile phone card, such as the phone number information bounded with the SIM (Subscriber Identity Module) card, which causes the steps of short message payment to be complex and lack of flexibility.

### SUMMARY

The present invention provides a mobile payment method, device and system for a server and a client, to solve the problem that in the prior art the payment channel provided by the payment service providers can not cover all regions.

According to an aspect of the present invention, a mobile payment method for a server is provided, which include: receiving a payment request message sent by a client; and selecting one piece of payment channel information from preset payment channel information set and issuing said one piece of payment channel information to the client. The payment channel information set includes a plurality of pieces of payment channel information, regions covered by different payment channel information do not overlap completely, and the multiple pieces of payment channel information cover all regions.

According to another aspect of the present invention, a mobile payment method for a client is provided, which includes: sending a payment request message including a mobile device identification to a server when mobile payment service is needed, wherein the mobile device identification is automatically obtained by the client; upon receipt of payment channel information sent by the server, making a payment by using the payment channel information. The client does not need to send user region identification to the server, before completing the payment using the payment channel information issued by the server.

According to another aspect of the present invention, a mobile payment device for a server is provided, which includes: a request receiving module for receiving a payment request message sent by a client; and a channel issuing module for selecting one piece of payment channel information in a preset payment channel information set and issuing said one piece of payment channel information to the client. The payment channel information set includes a plurality of pieces of payment channel information, regions covered by different payment channel information do not overlap completely, and the multiple pieces of payment channel information cover all regions.

According to still another aspect of the present invention, a mobile payment device for a client is provided, which includes: a request sending module for sending a payment request message including a mobile device identification to a server when mobile payment service is needed; and a payment module for making a payment by using payment channel information upon receipt of the payment channel information issued by the server. Before the payment module completes the payment using the payment channel information issued by the server, the mobile payment device for a client does not need to send the user region identification to the server.

According to another aspect of the present invention, a mobile payment system is provided, which includes: the mobile payment device for a server according to the present invention and the mobile payment device for a client according to the present invention.

The server according to the present invention may select different payment channel information provided by a plurality of payment providers to form a payment channel information set so that the payment service that may be provided can cover all regions, which overcomes the limitation in the prior art that a certain piece of payment channel information only covers some regions.

### BRIEF DESCRIPTION OF THE DRAWINGS

Figure 1 is a schematic flowchart of a mobile payment method provided by the present invention;
Figure 2 is a schematic flowchart of another mobile payment method provided by the present invention;
Figure 3 is a schematic structural diagram of a mobile payment device provided by the present invention;
Figure 4 is a schematic structural diagram of another mobile payment device provided by the present invention; and
Figure 5 is a schematic structural diagram of a mobile payment system provided by the present invention.

### DETAILED DESCRIPTION OF THE PREFERRED EMBODIMENTS

Specific implementations of mobile payment method, device and system for a server and a client of the present invention will be described below in detail in conjunction with the accompanying drawings and specific embodiments.

The present invention provides a mobile payment method for a server, including:
step 101, receiving a payment request message sent by a client; and
step 102, selecting one piece of payment channel information from a preset payment channel information set and issuing said one piece of payment channel information to the client.

The payment channel information set includes a plurality of pieces of channel information, regions covered by different payment channel information do not overlap completely, and the plurality of pieces of payment channel information cover all regions.

The server in the present invention may select different payment channel information provided by a plurality of payment service providers to form a payment channel information set so that the payment service that may be provided can cover all regions, which overcomes the limitation in the prior art that a certain piece of payment channel information only covers some regions.

Specially, the payment channel information includes information, method and the like for assisting a user to complete a payment, such as payment short messages in mobile phone payment. When selecting each piece of payment channel information constituting the payment channel information set of the server, the following aspects should be taken into account: a selected payment channel information should be stable and cover broad regions; regions covered by all selected payment channel information should cover all regions, and any region should be covered by at least two pieces of payment channel information.

Preferably, the payment request message may include a mobile device identification automatically obtained by a client. In addition, according to the mobile payment steps for a server of the present invention, selecting one piece of payment channel information from a preset payment channel information set and issuing said one piece of payment channel information to the client may include: determining whether a user region identification associated with the mobile device identification is locally saved by the server; and when it is determined the user region identification associated with the mobile device identification is locally saved, selecting one piece of payment channel information from a preset payment channel information set and issuing one piece of payment channel information to the client according to the user region identification associated with the mobile device identification.

Alternatively, when it is determined that no user region identification associated with the mobile device identification is locally saved, at least two pieces of payment channel information from the preset payment channel information set may be determined to be preferable payment channel information, and then one piece of the preferable payment channel information with the least usage amount is selected from the preferable payment channel information and issued to the client.

Preferably, after the piece of payment channel information is issued to the client, the mobile payment method for a server according to the present invention may further include: determining whether a payment by the client using the issued payment channel information is successful; and when it is determined that the payment by the server using the issued payment channel information is successful, obtaining and saving the user region identification associated with the mobile device identification according to an order information including the user region identification generated by the client.

Specially, the mobile device identification may be the identification information of the mobile device. For example, an IMEI (International Mobile Equipment Identification Number) may be used as the mobile device identification for a mobile phone. The user region identification may be an identification representing a region where a provider providing the user with mobile device service is located. The server determines the region where the provider providing the user with mobile device is located according to the user region identification, and accordingly selects the payment channel information covering the region and issues the payment channel information to the client for use by a user. For a mobile phone user, mobile phone number may be used as its user region identification.

In specific implementation, because the server is a software embedded in a mobile device, the server can directly obtain information on the identification of the mobile device, but cannot directly obtain information on the region where the provider providing the user with mobile device is located, that is, it cannot directly obtain the user region identification. Considering that generally a user uses the same mobile device to make the payment" the server may obtain and save the mobile device identification corresponding to the user as well as the user region identification from the order information after the user successfully uses the mobile payment function for the first time, after that when the user requests for a payment again, the client only needs to send a payment request message including the mobile device identification to the server, and the server may determine the user region identification corresponding to the user according to the mobile device identification locally saved.

In specific implementation, when determining that no user region identification is locally saved, the server may attempts to select one piece of payment channel information and issue the piece of payment channel information to the client for use. In order to ensure the largest probability of successfully using the piece of payment channel information attempted to be selected by the user the server may select a piece of payment channel information covering the most regions and with the best stability in the payment channel information set to be the payment channel information attempted to be selected.

As a matter of fact, because each piece of payment channel information in the payment channel information set selected by the server is stable and covers broad regions, and the server also needs to ensure that each piece of payment information channel has comparative load pressure level, the server may determine a plurality of pieces of payment channel information covering the most regions and with the best stability from the payment channel information set to be preferable payment channel information, and select one piece of the preferable payment channel information with the least current usage amount and issue the piece of the preferable payment channel information to the server for use when it is determined that no use region identification is locally stored. In addition, in order to achieve the purpose that each piece of payment information channel in the payment channel information set has comparative load pressure level, the server may also alternatively select each piece of preferable payment channel information from the plurality of preferable payment channel information in a circular way to be the payment channel information attempted to be selected which is issued to the client for use. Alternatively, during a fixed time period, when the server receives the payment request message sent by the client and no corresponding user region identification is locally saved, the server may select the same piece of preferable payment channel information from the plurality of preferable payment channel information client be issued.

In specific implementation, when the client successfully completes a payment by using the payment channel information issued by the server, if the payment channel information used by the client is the payment channel information according to the user region identification associated with the mobile device identification which is locally saved by the server, the server obtains and saves the user region identification corresponding to the client from the order information to which a successful payment is made currently, such that the server can use the user region identification used in this successful payment to be its determined corresponding payment channel information upon receipt of the next payment request message sent by the client. As such, the probability of making a successful payment by the client is increased. On the other hand, if the payment channel information used by the client is a piece of the preferable payment channel information which the server attempts to select for the client, it indicates that the payment channel information the server attempts to select can cover the region where the user is located, therefore, the server may obtain the user region identification from the order information to which the user made a successful payment, and by saving these user region identifications obtained from the order message into the server locally, the server may select corresponding payment channel information for the client according to the user region identification when the client requests for a payment again. In this "learning" way, the server may provide payment function for more and more users in a condition that users are not required to input user region identification.

Preferably, according to the steps of a mobile payment method for a server of the present invention, selecting one piece of payment channel information from a preset payment channel information set and issuing said one piece of payment channel information to the client may include: determining a region corresponding to the user region identification according to the user region identification associated with the mobile device identification; determining all payment channel information covering the region in the payment channel information set; selecting one piece of the payment channel information with the least current usage amount and issuing the one piece of the payment channel information to the client among all payment channel information covering the region.

Specially, in order to make the load pressure level of each piece of payment channel information in the payment channel information set of the server even, while selecting the payment channel information for the client according to the user region identification, all payment channel information covering the region where the user is located is first determined from the payment channel information set; then one piece of the payment channel information with the least current usage amount is selected from all payment channel information covering the region where the user is located and issued to the client for use, thereby ensuring that each piece of payment channel information has comparative load pressure level, so as to avoid the occurrence of a case that some pieces of payment channel information has too high load pressure level while the others has too low load pressure level.

Preferable, after issuing the piece of payment channel information to the client the mobile payment method for a server according to the present invention, may further include: determining whether a payment by the client using the issued payment channel information is successful; when it is determined that the payment by the client using the issued payment channel information is not successful, notifying the client to return the user region identification, waiting for receiving the user region identification returned by the client, and upon receipt of the user region identification, re-selecting one piece of payment channel information in the preset payment channel information set and issuing the re-selected piece of payment channel information to the client.

Specially, when the payment channel information used by the client is the payment channel information according to the user region identification associated with the mobile device identification which is locally saved by the server, and the payment using the payment channel information is not successful, it indicates that the user region identification currently corresponding to the mobile device identification is not consistent with the user region identification saved by the server (e.g., if a user uses two different SIM cards in the same mobile phone to make short message payment, the mobile device identifications will be the same but the user region identifications will be different). Therefore, it is possible that the payment channel information selected for the client according to the user region identification associated with the mobile device identification which is locally saved by the server may not cover the region where the provider currently providing the user with mobile device service is located. At this point, the server needs to obtain the information on the region where the provider is located. For example, the server may send a reminder message to the client notifying the client to return the user region identification, and then determine the corresponding payment channel information for the client according to the user region identification returned by the client. On the other hand, if the payment channel information used by the client is a piece of the preferable payment channel information the server attempts to select, and the payment using the payment channel information is not successful, it indicates that the payment channel information the server attempts to select does not cover the region where the user is located. In this case, the server may send a reminder message to the client notifying the client to return the user region identification, and then determine the corresponding payment channel information for the client according to the user region identification returned by the client.

Preferably, after issuing the piece of payment channel information the client, the mobile payment method for a server according to the present invention may further include: determining whether the payment by the client using the issued payment channel information is successful; and when it is determined that the payment by the client using the issued payment channel information is successful, updating the usage amount of the issued payment channel information.

Specially, when the client successfully makes the payment by using the issued payment channel information, the server may update the usage amount of the issued payment channel information. As such, at any time, the server is capable of determining the current usage amount of each piece of payment channel information in the payment channel information set, thereby providing reference for making the load pressure level of each piece of payment channel information even.

The server according to the present invention may select different payment channel information provided by a plurality of payment providers to form a payment channel information set so that the payment service that may be provided can cover all regions, which overcomes the limitation in the prior art that a certain piece of payment channel information only covers some regions. In addition, the server according to the present invention may select the payment channel information according to the user region identification locally saved and issue the payment channel information to the client, omitting the operation of re-inputting by the client, which makes the mobile payment simpler and more convenient.

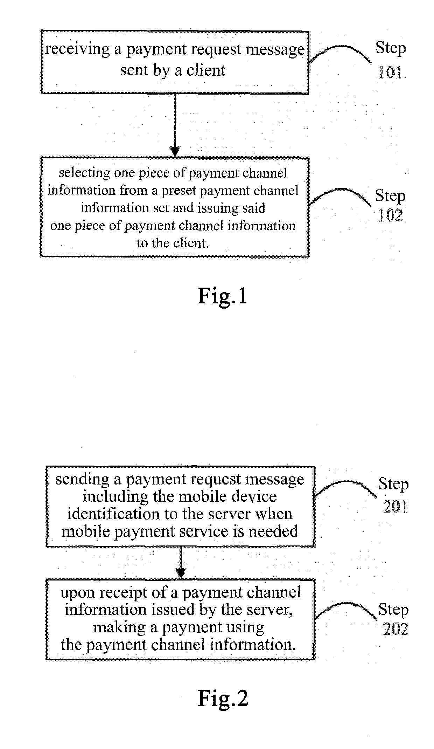

The present invention further provides a mobile payment method for a client, as illustrated in FIG 2, including:
step 201, sending a payment request message including the mobile device identification to the server when mobile payment service is needed, wherein the mobile device identification is automatically obtained by the client; and
step 202, upon receipt of a payment channel information issued by the server, making a payment using the payment channel information.

Before completing the payment using the payment channel information issued by the server, the client does not need to send the user region identification to the server.

Preferably, the mobile payment method for a client according to the present invention may also include: when the payment using the payment channel information issued by the server is not successful, waiting for a notice of returning the user region identification from the server; upon receipt of the notice, sending the user region identification to the server; and, upon receipt of the payment channel information re-issued by the server according to the user region identification, making the payment by using the re-issued payment channel information.

Specially, after the client completes the payment according to the payment channel information issued by the server, if the feedback is not received within a preset time (timespan may be set according to specific application), or upon the receipt of the reminder message sent by the server, it may be determined that the payment using the payment channel information issued by the server is not successful. At this point, the client may prompt the user to input the user region identification (e.g., for a mobile phone user, a mobile phone number may be input), then sends the user region identification to the server and waits for the payment channel information re-issued by the server to make the payment.

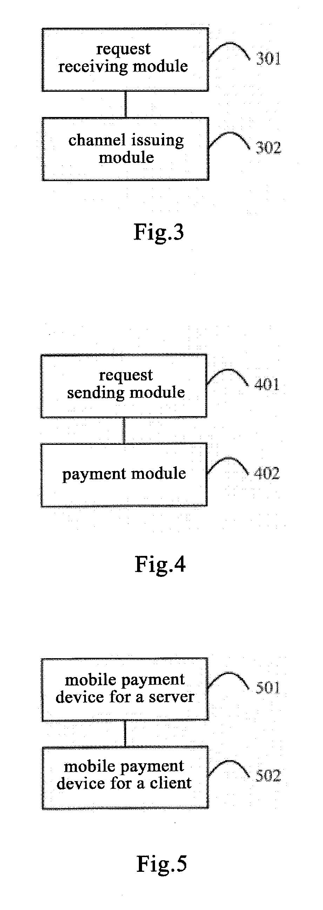

The present invention also provides a mobile payment device for a server, as illustrated in FIG. 3, including:
a request receiving module 301, for receiving a payment request message sent by a client;
a channel issuing module 302, for selecting a piece of payment channel information from a preset payment channel information set and issuing same to the client.

The payment channel information set consists of a plurality of pieces of channel information, the regions covered by different payment channel information do not overlap completely, and the multiple pieces of payment channel information cover all the regions.

As for the specific function of each module of the mobile payment device for the server, please refer to the specific achievement of the mobile payment method for the server, illustrated in Fig. 1.

The present invention further provides a mobile payment device for a server, as illustrated in FIG. 3, including:
a request receiving module 301, for receiving a payment request message sent by a client; and
a channel issuing module 302, for selecting one piece of payment channel information in a preset payment channel information set and sending said one piece of payment channel information to the client.

The payment channel information set is formed by a plurality of pieces of payment channel information, regions covered by different payment channel information do not overlap completely, and the plurality of pieces of payment channel information cover all regions.

Specific functions achieved by each module of the mobile payment device for a server refer to the specific implementing process of the mobile payment method for a service illustrated in Figure 1, and is not elaborated herein.

The present invention further provides a mobile payment device for a client, as illustrated in FIG. 4, including:
a request sending module 401, for sending a payment request message including mobile device identification to a server when a mobile payment service is needed;
a payment module 402, for upon receipt of a payment channel information issued by the server, making the payment by using the payment channel information.

Before the payment module 402 completes the payment by using the payment channel information issued by the server, the mobile payment device for a client does not need to send user region identification to the server.

Specific functions achieved by each module of the mobile payment device for a client refer to the specific implementing process of the mobile payment method for a client illustrated in Fig. 2, and is not elaborated herein.

The present invention also provides a mobile payment system, as illustrated in FIG. 5, including: the mobile payment device for a server 501 according to the present invention, and the mobile payment device for a client 502 according to the present invention.

The present invention also provides a computer-readable medium with instructions saved therein. When a processor reads the computer-readable medium, the instructions are capable of implementing the mobile payment method for a server according to the present invention, this method includes: receiving a payment request message sent by a client; and selecting one piece of payment channel information in a preset payment channel information set and sending said one piece of payment channel information to the client. The payment channel information set is formed by a plurality of pieces of payment channel information, regions covered by different payment channel information do not overlap completely, and the plurality of pieces of payment channel information cover all regions.

The present invention also provides a computer-readable medium with instructions saved therein. When a processor reads the computer-readable medium, the instructions are capable of implementing the mobile payment method for a client according to the present invention, this method includes: sending a payment request message including a mobile device identification to a server when mobile payment service is needed, wherein the mobile device identification is automatically obtained by the client; upon receipt of a payment channel information issued by the server, making the payment by using the payment channel information. Before completing the payment by using the payment channel information issued by the server, the client does not need to send user region identification to the server.

Obviously, various modifications and variations may be made by the person skilled in the art without departing from the spirit and scope of the present invention. As such, if these modifications and variations of the present invention fall into the scope of the claims of the present invention and their equivalents, the present invention intends to cover these modifications and variations.

## Claims

1. A mobile payment method for a server, including steps of:
receiving a payment request message sent by a client; and
selecting one piece of payment channel information in a preset payment channel information set and issuing said one piece of payment channel information to the client;
wherein, the payment channel information set includes a plurality of pieces of payment channel information, regions covered by different payment channel information do not overlap completely, and the multiple pieces of payment channel information cover all regions.

2. The method of claim 1, wherein the payment request message includes a mobile device identification which is automatically obtained by the client, and
wherein, the step of selecting one piece of payment channel information in a preset payment channel information set and issuing said one piece of payment channel information to the client includes:
determining whether a user region identification associated with the mobile device identification is locally saved by the server; and
when it is determined that the user region identification associated with the mobile device identification is locally saved by the server, selecting one piece of payment channel information in the preset payment channel information set according to the user region identification associated with the mobile device identification and issuing one piece of payment channel information to the client.

3. The method of claim 2, wherein, the step of selecting one piece of payment channel information in the preset payment channel information set according to the user region identification associated with the mobile device identification and issuing one piece of payment channel information to the client includes:
determining a region corresponding to the user region identification according to the user region identification associated with the mobile device identification;
determining all payment channel information covering the region in the payment channel information set;
among all payment channel information covering the region, selecting one piece of payment channel information with the least current usage amount to be issued to the client,

4. The method of claim 1, wherein the payment request message includes a mobile device identification which is automatically obtained by the client, and
wherein, the step of selecting one piece of payment channel information in the preset payment channel information set and issuing said one piece of payment channel information to the client includes:
determining whether a user region identification associated with the mobile device identification is locally saved by the server; and
when it is determined that the user region identification associated with the mobile device identification is not locally saved by the server, determining at least two pieces of payment channel information in the preset payment channel information set to be preferable payment channel information, and selecting one piece of the payment channel information with the least current usage amount from the preferable payment channel information to be issued to the client.

5. The method of any of claims 1-4, after issuing said one piece of payment channel information to the client, further including:
determining whether a payment by the client using the issued payment channel information is successful;
when it is determined that the payment by the server using the issued payment channel information is successful, obtaining and saving a user region identification associated with the mobile device identification, according to order information including the user region identification generated by the client.

6. The method of any of claims 1-4, after issuing said one piece of payment channel information to the client, further including:
determining whether a payment by the client using the issued payment channel information is successful;
when it is determined that the payment by the server using the issued payment channel information is not successful, notifying the client to return a user region identification, waiting for receiving the user region identification returned by the client, and upon receipt of the user region identification, re-selecting one piece of payment channel information in the preset payment channel information set according to the user region identification and issuing the re-selected one piece of payment channel information to the client.

7. The method of any of claims 1-4, after issuing said one piece of payment channel information to the client, further including:
determining whether a payment by the client using the issued payment channel information is successful;
when it is determined that the payment by the server using the issued payment channel information is successful, updating usage amount of the issued payment channel information.

8. The method of any of claims 1-4, wherein the mobile device includes a mobile phone device, the mobile device identification includes IMEI of the mobile phone device, and the user region identification includes phone number information bounded with a SIM card.

9. A mobile payment method for a client, including steps of:
sending a payment request message including a mobile device identification to a server when a mobile payment service is needed, wherein the mobile device identification is automatically obtained by the client;
upon receipt of a payment channel information issued by a server, making a payment by using the payment channel information,
wherein, the client does not need to issue a user region identification to the server, before completing the payment by using the payment channel information issued by the server.

10. The method of claim 9, further including steps of:
when the payment by using the payment channel information issued by the server is not successful, waiting for notice of returning the user region identification from the server;
upon receipt of the notice, sending the user region identification to the server; and,
upon receipt of a payment channel information re-issued by the server according to the user region identification, making the payment by using the re-issued payment channel information

11. The method of claim 9, wherein the mobile device includes a mobile phone device, the mobile device identification includes IMEI of the mobile phone device, and the user region identification includes phone number information bounded with a SIM card.

12. A mobile payment device for a server, including:
a request receiving module, for receiving a payment request message sent by a client; and
a channel issuing module, for selecting one piece of payment channel information in a preset payment channel information set and issuing said one piece of payment channel information to the client,
wherein, the payment channel information set includes a plurality of pieces of channel information, regions covered by different payment channel information do not overlap completely, and the multiple pieces of payment channel information cover all regions.

13. A mobile payment device for a client, including:
a request issuing module, for sending a payment request message including a mobile device identification to a server when a mobile payment service is needed; and
a payment module, for making a payment by using a payment channel information upon receipt of the payment channel information issued by a server,
wherein, before the payment module completes the payment by using the payment channel information issued by the server, the mobile payment device for a client does not need to issue a user region identification to the server.

14. A mobile payment system, including:
the mobile payment device for a server of claim 12 and the mobile payment device for a client of claim 13.
